# EUROPEAN PATENT APPLICATION

(11) **EP 4 570 978 A1**
(43) Date of publication of application: **18.06.2025**
(21) Application number: 23859230.7
(22) Date of filing: 24.08.2023
(51) Int. Cl.: D06F 25/00, D06F 58/20, D06F 58/26, D06F 58/24

(54) **ALL-IN-ONE WASHING AND DRYING MACHINE HAVING DEHUMIDIFICATION FUNCTION, AND DEHUMIDIFICATION METHOD**

(30) Priority: 31.08.2022 CN 202222307078 U
(71) Applicant: Nanjing Roborock Innovation Technology Co., Ltd., Nanjing, Jiangsu 210039 (CN)
(72) Inventor: LIN, Chenghu, Shenzhen, Guangdong 518000 (CN); LIU, Tong, Shenzhen, Guangdong 518000 (CN); QI, Hang, Shenzhen, Guangdong 518000 (CN); XU, Ming, Shenzhen, Guangdong 518000 (CN); FANG, Junjun, Shenzhen, Guangdong 518000 (CN); QUAN, Gang, Shenzhen, Guangdong 518000 (CN)
(74) Representative: Manitz Finsterwald Patent- und Rechtsanwaltspartnerschaft mbB
(86) International application number: PCT/CN2023/114624
(87) International publication number: WO 2024/046197

(57) **Abstract**

Disclosed are an all-in-one washing and drying machine having a dehumidification function, and a dehumidification method. The all-in-one washing and drying machine comprises: a washing drum (1), one end of the washing drum (1) being provided with a drum door (11) that is capable of being opened and closed; a dehumidification apparatus (2), comprising a dehumidification channel (21) and a dehumidification assembly (22), the dehumidification channel (21) comprising a first ventilation opening (211) and a second ventilation opening (212), the first ventilation opening (211) being in communication with the washing drum (1), the dehumidification assembly (22) being at least partially provided in the dehumidification channel (21) and being used for adsorbing moisture in the dehumidification channel (21), and a circulating fan (23) being provided in the dehumidification channel (21) to push gas in the dehumidification channel (21) to flow; and a channel switching apparatus (3) used for switching the second ventilation opening (212) to be in communication with the washing drum (1) or the external environment. The all-in-one washing and drying machine can complete dehumidification of laundry by means of the dehumidification apparatus when the drum door is closed and the second ventilation opening is connected to the washing drum, and can complete dehumidification of the external environment by means of the dehumidification apparatus when the drum door is opened and the second ventilation opening is connected to the external environment. The all-in-one washing and drying machine is integrated with an external environment dehumidifier, thus having the advantages of comprehensive functions and occupying a small space.

## Description

This application claims priority to Chinese Patent Application No. CN202222307078.0, titled "Washer-dryer machine having dehumidifying function" and filed on August 31, 2022, the entire content of which is incorporated herein by reference.

### TECHNICAL FIELD

The present application relates to the field of electric household appliances, and more particularly, to a washer-dryer machine having a dehumidifying function and a dehumidifying method.

### BACKGROUND OF THE INVENTION

As people's living standards improve and their lifestyles change, people are no longer satisfied with the basic functions of consumer products. For the washer-dryer machine industry, a washer-dryer machine having a dehumidifying function can dehumidify the laundry after washing, and is increasingly favored by consumers.

The inventors realized that an existing washer-dryer machine having a dehumidifying function usually only dehumidify the laundry, and cannot replace a dehumidifier to dehumidify the external environment of the washer-dryer machine. Therefore, there is a need for a washer-dryer machine that has both dehumidifying functions for the laundry and the external environment to achieve a high degree of integration, save living space, and avoid waste of resources.

### SUMMARY OF THE INVENTION

### (I) Purpose of the present application

The purpose of the present application is to provide a washer-dryer machine having a dehumidifying function to solve the problem that an existing washer-dryer machine has low degree of integration.

### (II) Technical solutions

To solve the problem, a first aspect of the present application provides a washer-dryer machine having a dehumidifying function, including:
a washing cylinder, one end of the washing cylinder being provided with a cylinder door that can be opened and closed;
a dehumidifying apparatus including a dehumidifying passage and a dehumidifying assembly, the dehumidifying passage including a first vent and a second vent, the first vent being connected to the washing cylinder, the dehumidifying assembly being at least partially disposed within the dehumidifying passage, and the dehumidifying passage being provided with a circulating fan for promoting air flow within the dehumidifying passage; and
a passage switching apparatus for switching the second vent to be connected to the washing cylinder or to an external environment.

In some embodiments, the second vent is configured to include a first opening for connecting to the washing cylinder and a second opening for connecting to the external environment;
and the passage switching apparatus is configured with a baffle for rotatably connecting to the second vent so as to block the first opening or the second opening.

In some embodiments, a plane where the first opening is located and a plane where the second opening is located are at a preset included angle which is larger than or equal to 30 degrees and is smaller than or equal to 90 degrees.

In some embodiments, the passage switching apparatus further includes a baffle motor whose output shaft is connected to the baffle so as to drive the baffle to rotate.

In some embodiments, the dehumidifying assembly comprises a dehumidifying rotary disk and a rotary disk housing;
the dehumidifying rotary disk is rotatably arranged in the rotary disk housing;
a chamber of the rotary disk housing comprises a dehumidifying chamber and a moisture-discharging chamber, wherein the dehumidifying chamber forms a part of the dehumidifying passage, a part of the dehumidifying rotary disk which rotates to the dehumidifying chamber is configured to adsorb moisture within the dehumidifying passage, and a part of the dehumidifying rotary disk which rotates to the moisture-discharging chamber is configured to discharge the moisture.

**In** some embodiments, the washer-dryer machine further includes a regenerating passage which includes a regenerating apparatus and/or a condenser and/or a regenerating fan;
the moisture-discharging chamber forms a part of the regenerating passage;
the regenerating apparatus is arranged in the moisture-discharging chamber for desorbing moisture in the dehumidifying rotary disk;
the regenerating fan is configured to promote air flow in the regenerating passage; and
the condenser is configured to liquefy water vapor in the regenerating passage and discharge the liquefied water vapor through a water discharging port.

**In** some embodiments, the regenerating apparatus is a heating assembly;
the heating assembly is connected to the rotary disk housing, and the heating assembly and the dehumidifying rotary disk are arranged at an interval in a parallel manner.

In some embodiments, a third temperature sensor is arranged in the vicinity of the second vent for obtaining a third temperature of an air flow in the vicinity of the second vent so as to control operation of the heating assembly based on the third temperature.

In some embodiments, a second temperature sensor is arranged in a pipe path between the heating assembly and the condenser for obtaining a second temperature of an air flow in the pipe path between the heating assembly and the condenser so as to judge if the condenser has a fault based on the second temperature.

In some embodiments, the washer-dryer machine further includes an enclosure, wherein
the washing cylinder is located in the enclosure, and the cylinder door is arranged on a side wall of the enclosure; and
the dehumidifying passage is located between the enclosure and the washing cylinder, and the second opening is arranged on a wall of the enclosure.

### (III) Beneficial effects

The present application provides a washer-dryer machine having a dehumidifying function. When the cylinder door is closed and the passage switching apparatus connects the second vent to the washing cylinder, humid air inside the washing cylinder flows into the dehumidifying passage under the action of the circulating fan. Moisture is removed through the dehumidifying assembly. The air after the removal of the moisture flows into the washing cylinder under the action of the circulating fan, and the cycle is repeated to reduce the moisture inside the washing cylinder, so as to achieve the purpose of dehumidifying the laundry inside the washing cylinder. When the cylinder door is opened and the passage switching apparatus connects the second vent to the external environment, humid air from the external environment flows into the dehumidifying passage under the action of the circulating fan. Moisture is removed through the dehumidifying assembly. The air after removal of the moisture flows into the external environment under the action of the circulating fan, and the cycle is repeated to reduce the moisture in the external environment of the washer-dryer machine, so as to achieve the purpose of dehumidification of the external environment. The washer-dryer machine is especially suitable for areas with more humid weather.

### BRIEF DESCRIPTION OF DRAWINGS

FIG. 1 is a schematic structural diagram of a washer-dryer machine having a dehumidifying function according to an embodiment of the present application;
FIG. 2 is a schematic structural diagram of a passage switching apparatus according to an embodiment of the present application;
FIG. 3 is a top view of a washer-dryer machine having a dehumidifying function according to an embodiment of the present application;
FIG. 4 is a schematic structural diagram of a washer-dryer machine having a dehumidifying function according to another embodiment of the present application;
FIG. 5 is a flow chart of a dehumidifying method performed by a washer-dryer machine having a dehumidifying function according to an embodiment of the present application; and
FIG. 6 is a flow chart of a dehumidifying method performed by a washer-dryer machine having a dehumidifying function according to another embodiment of the present application.

In the drawings,
1-washing cylinder; 11-cylinder door;
2-dehumidifying apparatus; 21-dehumidifying passage; 211- first vent; 212-second vent; 2121-first opening; 2122-second opening; 22-dehumidifying assembly; 221-dehumidifying rotary disk; 222- rotary disk motor; 223-heating assembly; 23-circulating fan;
3-passage switching apparatus; 31-baffle rotary shaft; 32-baffle; 33-baffle motor; 41-regenerating passage; 42-condenser; 421-water discharging port; 422-condensing pipe path; 43-regenerating fan;
5-enclosure.

### DETAILED DESCRIPTION

In the following description, a great deal of specific details is given to provide a more thorough understanding of the present application. However, it is apparent to those skilled in the art that the present application can be implemented without one or more of these details. In other examples, some technical features that are well known in the art will not be described to avoid confusion with the present application.

It shall be noted that the terms used herein are merely intended to describe specific embodiments and are not intended to limit exemplary embodiments according to the present application. As used herein, the singular form is also intended to include the plural form, unless the context clearly indicates otherwise. In addition, it shall also be understood that the terms "comprising" and/or "including", when used herein, may indicate the presence of stated features, wholes, steps, operations, components and/or assemblies, but do not exclude the presence or addition of one or more other features, wholes, steps, operations, components, assemblies and/or combinations thereof.

Exemplary embodiments of the present application will be described herein in more detail with reference to the accompanying drawings. However, these exemplary embodiments may be implemented in a variety of different forms and shall not be construed as being limited to the embodiments set forth herein. It shall be understood that these embodiments are provided to make the content of the present application thorough and complete and to fully communicate the ideas of these exemplary embodiments to those of ordinary skill in the art.

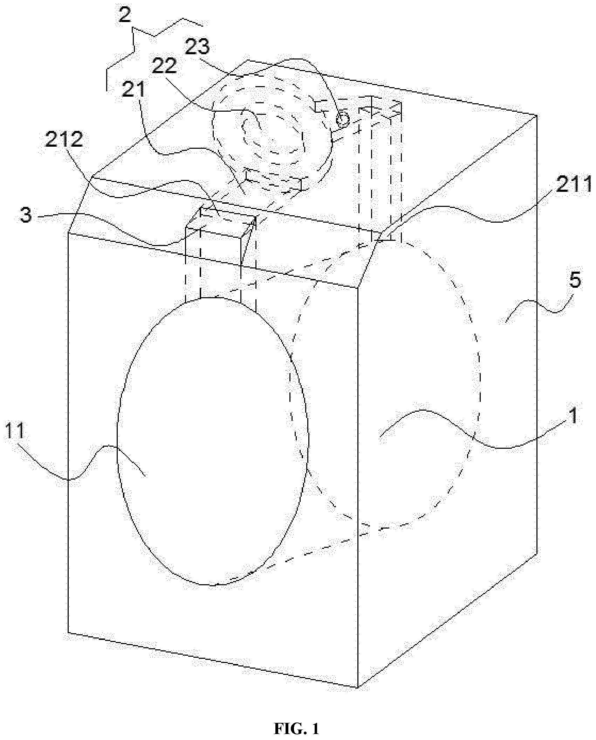

FIG. 1 shows a washer-dryer machine having a dehumidifying function according to an embodiment of the present application. The washer-dryer machine includes a washing cylinder 1, a dehumidifying apparatus 2 and a passage switching apparatus 3. One end of the washing cylinder 1 is provided with a cylinder door 11 that can be opened and closed. The dehumidifying apparatus 2 includes a dehumidifying passage 21 and a dehumidifying assembly 22. The dehumidifying passage 21 includes a first vent 211 and a second vent 212. The first vent 211 is connected to the washing cylinder 1, and the dehumidifying assembly 22 is at least partially disposed within the dehumidifying passage 21 for removing moisture within the dehumidifying passage 21. The dehumidifying passage 21 is provided with a circulating fan 23 for promoting air flow within the dehumidifying passage 21. The passage switching apparatus 3 is configured for switching the second vent 212 to be connected to the washing cylinder 1 or to an external environment.

The washer-dryer machine having a dehumidifying function provided by the present embodiment has two working states, including a laundry dehumidifying working state and an external environment dehumidifying working state. When the washer-dryer machine having a dehumidifying function is in the laundry dehumidifying working state, the cylinder door 11 is closed and the passage switching apparatus 3 connects the second vent 212 to the washing cylinder 1. Humid air inside the washing cylinder 1 flows into the dehumidifying passage 21 under the action of the circulating fan 23. Moisture is removed through the dehumidifying assembly 22. The air after the removal of the moisture flows into the washing cylinder 1 under the action of the circulating fan 23, and the cycle is repeated to reduce the moisture inside the washing cylinder 1, so as to achieve the purpose of dehumidifying the laundry inside the washing cylinder 1. When the washer-dryer machine having a dehumidifying function is in the external environment dehumidifying working state, the cylinder door 11 is opened and the passage switching apparatus 3 connects the second vent 212 to the external environment. Humid air from the external environment flows into the washing cylinder 1 through the opened cylinder door 11 under the action of the circulating fan 23. Moisture is removed through the dehumidifying assembly 22 after the humid air enters the dehumidifying passage 21. The air after removal of the moisture flows into the external environment under the action of the circulating fan 23, and the cycle is repeated to reduce the moisture in the external environment of the washer-dryer machine, so as to achieve the purpose of dehumidification of the external environment. In the related art, when a washing machine is in a non-washing state, the air in the washing cylinder cannot flow and bacteria can easily breed. The washer-dryer machine having a dehumidifying function provided by the present embodiment integrates a washer-dryer machine with an external environment dehumidifying machine, can make full use of the idle time of the washer-dryer machine, can ensure that the air in the washing cylinder flows and can avoid breeding of bacteria. The washer-dryer machine having a dehumidifying function has the advantages of a high degree of integration, has comprehensive functions and a small footprint, and is especially suitable for areas with more humid weather.

In some embodiments, the washer-dryer machine having a dehumidifying function further includes an enclosure 5, a water supplying pipe, a water discharging pipe, a driving apparatus and a controller. The shape of the enclosure 5 can be set according to the actual conditions and may be rectangular. The driving apparatus may be an electric one or a pneumatic one or an electric motor. The shape of the washing cylinder 1 can be set according to the actual conditions and may be cylindrical. The washing cylinder 1 has a space for accommodating laundry. The washing cylinder 1 is rotatably arranged in the enclosure 5 and is configured to rotate and wash clothes under driving of the driving apparatus. One end of the water supplying pipe is connected to the washing cylinder 1, and the other end thereof extends to the outside of the enclosure 5 and may be connected to a running water pipe for example so as to inject water into the washing cylinder 1. One end of the water discharging pipe is connected to the washing cylinder 1, and the other end thereof extends to the outside of the enclosure 5 for discharging water from the washing cylinder 1. Of course, the water supplying pipe may also include a detergent placement box so as to flush a detergent, a fabric softener or the like into the washing cylinder 1 with the supplied water. In other embodiments, the enclosure 5 may be provided with a washing liquid injection port connected to the washing cylinder 1 so as to add the washing liquid into washing cylinder 1. One end of the washing cylinder 1 is provided with a cylinder door 11, which may be arranged on a side wall of the enclosure 5 and may be hinged to enclosure 5. The opening and closing of the cylinder door 11 may be operated manually by a user or may be controlled electronically. The cylinder door 11 is used for putting laundry into the washing cylinder 1. When viewed from a spatial perspective, the dehumidifying passage 21 is arranged between the enclosure 5 and the washing cylinder 1. The dehumidifying passage 21 may be fixedly connected to the enclosure 5 or fixedly connected to the washing cylinder 1. Or some components of the dehumidifying passage 21 (such as one or more of the circulating fan 23, the pipe between the first vent 211 and the dehumidifying apparatus 2, the pipe between the second vent 212 and the dehumidifying apparatus 2, and the dehumidifying apparatus 2) may be fixedly connected to the enclosure 5, while other components of the dehumidifying passage 21 (such as one or more of the circulating fan 23, the pipe between the first vent 211 and the dehumidifying apparatus 2, the pipe between the second vent 212 and the dehumidifying apparatus 2, and the dehumidifying apparatus 2) may be fixedly connected to the washing cylinder 1. Or some of the above components are fixedly connected to the enclosure 5 integrally, while other components are connected to the enclosure 5 or the washing cylinder 1 separately.

One end of the washing cylinder 1 is provided with a washing cylinder air inlet connected to the first vent 211, and the other end thereof with a washing cylinder air outlet connected to the second vent 212. The first vent 211 may be arranged at an end of the washing cylinder 1 away from the cylinder door 11. Of course, the first vent 211 and the second vent 212 may be arranged at the same end of the washing cylinder 1. The passage switching apparatus 3 may be fixedly arranged on a side wall of the enclosure 5 or may be separately arranged in a pipe path between the washing cylinder air inlet and the dehumidifying apparatus 2. The top surface or side surface of the enclosure 5 may be provided with a display screen for displaying the working state of the washer-dryer machine. The top surface or side surface of the enclosure 5 may be provided with an input module for inputting control instructions for the washer-dryer machine. During use, the user may input one or more control instructions according to the actual needs. The control instructions may include a washing instruction, a spinning-drying instruction, a laundry dehumidifying instruction/drying instruction, and an external environment dehumidifying instruction/a dehumidifying instruction. The input module may include keys which may be mechanical buttons or a touch panel. A controller may be arranged between the enclosure 5 and the washing cylinder 1, and is in electronic control connection with the input module, the driving apparatus, the water supplying pipe, the water discharging pipe, the circulating fan 23 and the passage switching apparatus 3. The controller is used to receive control instructions through the input module, and control operation of the driving apparatus, the water supplying pipe, the water discharging pipe, the circulating fan 23 and/or the passage switching apparatus 3 according to the control instructions. The controller may be realized by various application-specific integrated circuits (ASICs), digital signal processors (DSPs), digital signal processing devices (DSPDs), programmable logic devices (PLDs), field programmable gate arrays (FPGAs), micro-controllers, microprocessors or other electronic components.

When cleaning the laundry, the user first puts the laundry into the washing cylinder 1 through the cylinder door 11 and then closes the cylinder door 11. After that, the user inputs a washing instruction, a spinning-drying instruction and/or a laundry dehumidifying instruction through the keys. The controller first controls the water supplying pipe to add water into the washing cylinder 1 according to the washing instruction, controls the electric motor to drive the washing cylinder 1 to rotate around its axis so as to wash the laundry, and after the washing is finished, controls the water discharging pipe to discharge the water from the washing cylinder 1. The controller controls the electric motor to drive the washing cylinder 1 to rotate continuously according to the spinning-drying instruction, so that most water remaining in the laundry is spun off using the centrifugal force. Then the water is discharged by the water discharging pipe. Finally, the controller controls the passage switching apparatus 3 to connect the second vent 212 to the washing cylinder 1 according to the laundry dehumidifying instruction, and controls the circulating fan 23 to start. In this way, humid air inside the washing cylinder 1 flows from the second vent 212 into the dehumidifying passage 21 under the action of the circulating fan 23, whereby the moisture is removed by the dehumidifying assembly 22. The air after removal of the moisture flows from the first vent 211 into the washing cylinder 1 under the action of the circulating fan 23, and the cycle is repeated to reduce the moisture inside the washing cylinder 1, so as to achieve the purpose of dehumidifying the laundry.

The washing cylinder 1 in the present disclosure may include an inner cylinder and an outer cylinder for example. Walls of the inner cylinder may be provided with water-and-air permeable holes and regularly or irregularly shaped ribs. The outer cylinder is a relatively enclosed cylinder and encapsulates the inner cylinder. The inner cylinder and the outer cylinder have the same rotational axis. During use, a clean water inlet is connected to a water inlet in the outer cylinder. Water entering the outer cylinder enters the inner cylinder through the water-and-air permeable holes of the inner cylinder. The ribs can be used to slap the laundry in the inner cylinder when the washing cylinder rotates to improve the cleaning effect. Meanwhile, the ribs can toss the laundry when the washing cylinder rotates to increase a contact area with the washing water or air.

In another embodiment, when dehumidification is to be performed for the external environment, the user first opens the cylinder door 11, and then inputs an external environment dehumidifying instruction through the keys. The controller controls the passage switching apparatus 3 to connect the second vent 212 to the external environment according to the external environment dehumidifying instruction, and controls the circulating fan 23 to start. Humid air in the external environment is sucked into the washing cylinder 1 under the action of the circulating fan 23 and flows into the dehumidifying passage 21, whereby moisture is removed by the dehumidifying assembly 22. The dried air after removal of the moisture flows into the external environment under the action of the circulating fan 23. The cycle is repeated to reduce the moisture in the external environment, thereby completing the external environment dehumidification. Normally, when the machine is in the laundry dehumidification state for example, if the cylinder door 11 is not closed or not completely closed, the machine will remind the user that normal working fails. When the machine is in the external environment dehumidification state, the cylinder door 11 needs to be kept opened. At this time, the controller will turn off the reminder or prompt the user to open the cylinder door 11 depending on the state selected by the user.

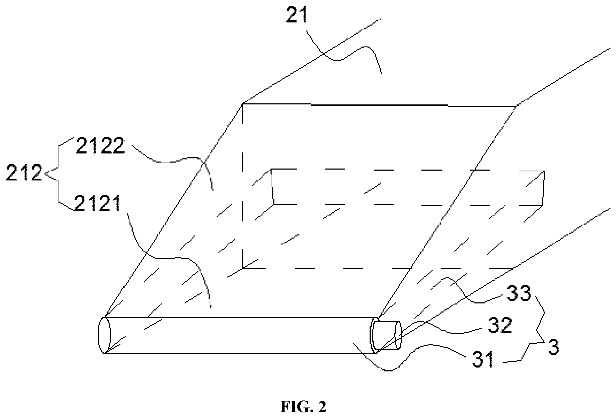

FIG. 2 is a schematic structural diagram of a passage switching apparatus 3 according to an embodiment of the present application. As shown in FIG. 2, the passage switching apparatus 3 includes a baffle rotary shaft 31, a baffle 32 and a baffle 32 motor.

The second vent is configured to include a first opening for connecting to the washing cylinder and a second opening for connecting to the external environment; and the passage switching apparatus is configured with a baffle for rotatably connecting to the second vent so as to block the first opening 2121 or the second opening 2122.

The baffle rotary shaft 31 is rotatably connected to an inner wall of the second vent 212. The first opening 2121 and the second opening 2122 are located at two sides of the baffle rotary shaft 31 respectively. The first opening 2121 and the second opening 2122 may have the same shape and may be rectangular or circular. A plane where the first opening 2121 is located and a plane where the second opening 2122 is located are at a preset included angle which is larger than or equal to 30 degrees and smaller than or equal to 90 degrees and which may be 45 degrees. The first opening 2121 is connected to the washing cylinder 1, and the second opening 2122 to the external environment. The baffle 32 is fixedly connected to the baffle rotary shaft 31. An output shaft of the baffle 32 motor is connected to the baffle rotary shaft 31 so as to drive the baffle rotary shaft 31 to rotate. The baffle rotary shaft 31 drives the baffle 32 to block the first opening 2121 or the second opening 2122 through rotation. The passage switching apparatus 3 of the present embodiment has a small footprint and can help reduce the overall volume of the washer-dryer machine.

In some embodiments, when the baffle 32 blocks the first opening 2121 or the second opening 2122, sealed blocking can be realized by providing a sealing strip such as sealing foam and sealing rubber to the baffle 32.

In other embodiments, other approaches may be adopted so that the connection state of the part of the dehumidifying passage located between the dehumidifying apparatus 2 and the washing cylinder 1 air inlet can be switched according to the user's needs. For example, a pipe A may be arranged in front of the washing cylinder 1 air inlet; a pipe B connected with the external environment may be provided; and both the pipes A and B are connected to the dehumidifying passage. Valves A and B for controlling the opening or closing can be arranged in the pipes A and B respectively. When the user selects the laundry dehumidifying state, the valve A is opened and the valve B is closed. When the user selects the external environment state, the valve A is closed and the valve B is opened.

Of course, the above embodiments do not specifically restrict the modes, and are only illustrative descriptions. The purpose is that when the user selects a different working mode, the connected object of the dehumidifying passage can be switched between the washing cylinder 1 and the external environment.

In some embodiments, the circulating fan 23 is arranged at one end of the dehumidifying passage 21 close to the first vent 211, and the dehumidifying assembly 22 is arranged at one end of the dehumidifying passage 21 close to the second vent 212. The dehumidifying assembly 22 includes a dehumidifying rotary disk, a heating assembly 223, a rotary disk motor 222 and a rotary disk housing 221. The cross-section of the rotary disk housing 221 can be circular. A chamber of the rotary disk housing 221 comprises a dehumidifying chamber and a moisture-discharging chamber, which are fan-shaped chambers arranged along a circumferential direction of the rotary disk housing 221. A volume of the dehumidifying chamber may be larger than that of the moisture-discharging chamber, and may be 3 to 6 times larger than that of the moisture-discharging chamber. The volume of the dehumidifying chamber may be 5 times larger than that of the moisture-discharging chamber. The dehumidifying chamber forms a part of the dehumidifying passage 21. The rotary disk housing 221 is an external frame for receiving the dehumidifying rotary disk.

The dehumidifying rotary disk is rotatably arranged in the rotary disk housing 221. A part of the dehumidifying rotary disk which rotates to the dehumidifying chamber is configured to adsorb moisture passing through the dehumidifying rotary disk within the dehumidifying passage 21, and a part of the dehumidifying rotary disk which rotates to the moisture-discharging chamber is configured to discharge the moisture. The heating assembly 223 is fixedly connected to another part of the rotary disk housing 221. The heating assembly 223 and the dehumidifying rotary disk are approximately arranged in a parallel manner with an interval. The dehumidifying rotary disk is a circular plate-shaped member, and the heating assembly 223 is a regular or irregular fan-shaped member. A region of the dehumidifying rotary disk covered by the heating assembly 223 is located in the moisture-discharging chamber. The dehumidifying rotary disk may be of a porous structure covered with a dehumidifying material. The dehumidifying material may be a material having good dehumidifying and desorbing performance, such as a cotton cloth, fibers, lithium chloride, a silica gel, a modified silica gel and a molecular sieve. Humid air is adsorbed when passing through the dehumidifying rotary disk, so that the humidity in the air is lowered. The heating assembly 223 may be realized by an element having a heating function, such as an electric heating wire or a PTC heater. The PTC heater is composed of a ceramic heating element and aluminum tubes. The PTC heater is an electric heater which has the advantages of low thermal resistance, high heat exchange efficiency, automatic constant temperature and power saving. The output shaft of the rotary disk motor 222 is in transmission connection with the rotary shaft of the dehumidifying rotary disk or is in transmission connection with the circumference of the dehumidifying rotary disk by a rack or belt to drive the dehumidifying rotary disk to rotate. In some embodiments, the controller is electrically connected to the rotary disk motor 222 and the heating assembly 223.

With the washer-dryer machine having a dehumidifying function provided by the present embodiment, when the heating assembly 223 performs dehydration to the dehumidifying rotary disk 221, a residual temperature on the dehumidifying rotary disk can be transferred to the inside of the washing cylinder 1 so as to increase the air temperature in the washing cylinder 1, whereby water evaporation of the laundry can be facilitated and the drying efficiency of the laundry can be improved.

During use, the controller controls the heating assembly 223 to heat according to the laundry dehumidifying instruction or the external environment dehumidifying instruction, and controls the rotary disk motor 222 to drive the dehumidifying rotary disk to rotate. A part of the dehumidifying rotary disk which rotates to the dehumidifying chamber adsorbs moisture, and a part of the dehumidifying rotary disk 221 which rotates to the moisture-discharging chamber discharges the adsorbed moisture under the action of the heating assembly 223, thereby completing dehumidification of the laundry or the external environment.

In some embodiments, the washer-dryer machine having a dehumidifying function further includes a regenerating passage for discharging the moisture adsorbed by the dehumidifying assembly. The regenerating passage includes a condenser 42, a regenerating fan 43, the heating assembly 223 etc. The regenerating passage may be a closed or non-closed loop. When the regenerating passage is a closed loop, the heating assembly 223 heats and dehydrates a part of the dehumidifying rotary disk in a regenerating region with a high moisture content, so that water vapor is formed. The water vapor is then blown by the regenerating fan 43 to enter the condenser 42, where the water vapor is liquefied into liquid water. Then the liquid water is discharged from the condenser from a water discharging port arranged at the bottom of the condenser. Relatively dry air which has been condensed is also blown by the regenerating fan 43 to the heating assembly 223. And the cycle repeats. When the regenerating passage is a non-closed loop, the regenerating fan 43 can suck air from the external environment and blows the air to the heating assembly 223. The moisture-containing air passing through the regenerating region directly flows into the external environment, or relatively dry air which has been condensed and liquefied by the condenser directly flows into the external environment. The above water discharging port can be connected to the water discharging pipe of the washing cylinder 1. In some embodiments, the controller is electrically connected to the regenerating fan 43 and the condenser 42.

In some embodiments, the dehumidifying passage includes a first pipe path, a second pipe path and a third pipe path which are connected sequentially. The first vent 211 is arranged in the first pipe path, the second vent 212 in the third pipe path, the dehumidifying assembly 22 in the second pipe path, and the circulating fan 23 in the first pipe path. An area of a radial section of the first pipe path is a first preset value, an area of a radial section of the second pipe path is a second preset value, and an area of a radial section of the third pipe path is a third preset value. The first preset value may be equal to the third preset value, and both the first and third preset values are smaller than the second preset value. In the dehumidifying passage provided by the present embodiment, the area of the radial section of the second pipe path for receiving the dehumidifying assembly 22 is larger than the areas of the radial sections of the first pipe path and of the third pipe path, so that the dehumidifying assembly can fully adsorb the moisture of the air flow passing through the dehumidifying passage. Of course, it can be understood that to realize a smooth air path, the areas of the above pipe paths are not always fixed. For example, the areas of the sections in the first pipe path may vary. Similarly, the areas of the sections in the second and third pipe paths may also change gradually.

The moisture-discharging chamber, the regenerating fan and the condenser are connected sequentially to form a regenerating passage. In this embodiment, an air outlet of the regenerating fan is connected to the moisture-discharging chamber by a fourth pipe path, an air inlet of the regenerating fan is connected to an air outlet of the condenser, and an air inlet of the condenser is connected to the moisture-discharging chamber by a sixth pipe path.

In some embodiments, a first temperature sensor is arranged in the vicinity of the first vent 211 for detecting a temperature of air flowing out of the washing cylinder 1. A second temperature sensor is arranged in a pipe path connecting the regenerating region and the condenser 42 for detecting a temperature of moisture-containing air flow before the air flow enters the condenser 42. A third temperature sensor is arranged in the vicinity of the second vent 212 for detecting a temperature of an air flow entering the washing cylinder 1 or the external environment. The first, second and third temperature sensors are electrically connected to the controller respectively.

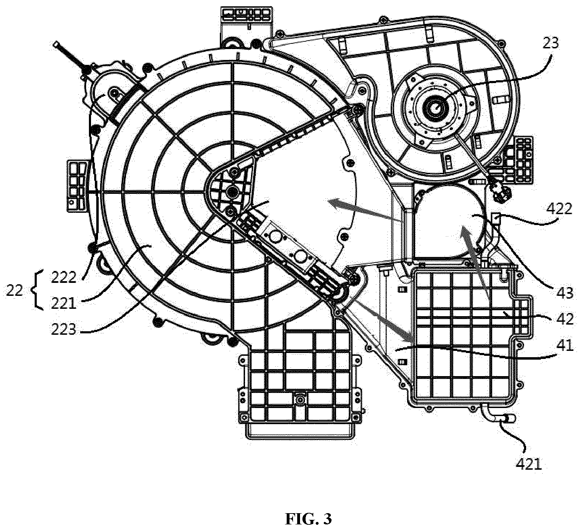

When performing laundry dehumidification, the user inputs a laundry dehumidifying instruction. The controller controls the electric motor to drive the washing cylinder 1 to rotate according to the laundry dehumidifying instruction so as to wash the laundry. Moisture remaining in the laundry is spun off under the centrifugal force and is discharged through the water discharging pipe. The passage switching apparatus 3 is controlled to connect the second vent 212 to the washing cylinder 1. The circulating fan 23 is controlled to rotate at a first preset rotational speed, which may be 1,000 to 5,000 rounds per second for example. Humid air in the washing cylinder 1 is pushed by the circulating fan 23 to flow into the dehumidifying passage 21 from the second vent 212. The controller controls the rotary disk motor 222 to drive the dehumidifying rotary disk 221 to rotate. The heating assembly 223 is controlled to work at a first preset power, which may be 500-2,000W for example. A part of the dehumidifying rotary disk 221 which rotates to the dehumidifying chamber adsorbs moisture, and a part of the dehumidifying rotary disk 221 which rotates to the moisture-discharging chamber discharges the adsorbed moisture under the action of the heating assembly 223. The controller controls the regenerating fan 43 and the condenser 42 to start. Humid air desorbed from the dehumidifying chamber by the dehumidifying assembly 22 flows into the condenser 42 under the action of the regenerating fan 43, so that part of the moisture in the air is condensed into liquid, and condensed liquid water is discharged through the water discharging port. The air after the removal of the moisture enters the heating assembly again under the action of the regenerating fan 43. The air in the regenerating passage 41 flows along the direction shown by the arrows in FIG. 3. The air after the removal of the moisture in the dehumidifying passage 21 is blown by the circulating fan 23, and flows from the second vent 212 into the washing cylinder 1. The controller can also acquire the temperature of the second vent 212 through the third temperature sensor. When the temperature of the second vent 212 is higher than or equal to a first preset temperature, laundry dehumidification is completed. The motor, the circulating fan 23, the rotary disk motor 222, the heating assembly 223, the regenerating fan 43 and the condenser 42 are controlled to stop working. The third temperature sensor can perform detection in real time or in a delayed manner. For example, when it is detected that an average of the temperature values in a first duration is higher than or equal to the first preset temperature, it is judged that laundry dehumidification is completed. Or the third temperature sensor performs detection once for every second duration. When an average of the temperature values detected in multiple times in a third duration is higher than or equal to the first preset temperature, it is judged that laundry dehumidification is completed.

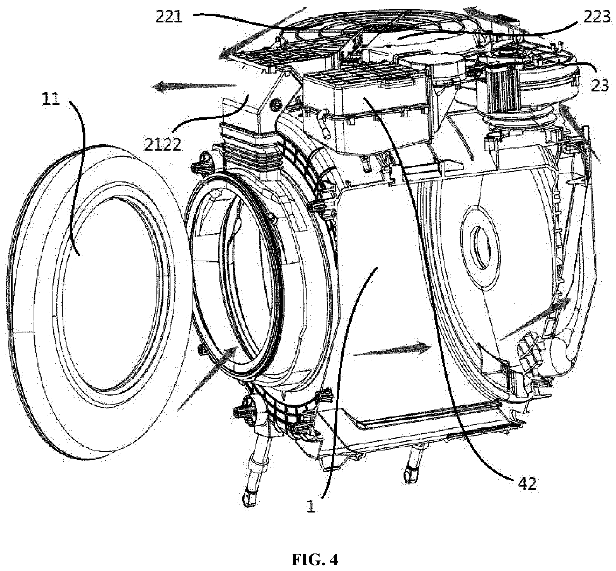

When performing external environment dehumidification, the user inputs an external environment dehumidifying instruction and opens the cylinder door 11. The controller controls the motor to stop working according to the external environment dehumidifying instruction. The motor may also continue rotating. The passage switching apparatus 3 is controlled to connect the second vent 212 to the external environment. The circulating fan 23 is controlled to rotate at a second rotational speed, which may be 1,000 to 5,000 rounds per second. Humid air from the external environment is pushed by the circulating fan 23, enters the washing cylinder 1 and flows into the dehumidifying passage 21. The air in the dehumidifying passage 21 flows along the direction shown by the arrows in FIG. 4. The controller controls the rotary disk motor 222 to drive the dehumidifying rotary disk to rotate. A part of the dehumidifying rotary disk 221 which rotates to the dehumidifying chamber adsorbs moisture. The heating assembly 223 is controlled to work at a second preset power, which may be 500-2,000W for example. A part of the dehumidifying rotary disk which rotates to the moisture-discharging chamber discharges the adsorbed moisture under the action of the heating assembly 223. The controller controls the regenerating fan 43 and the condenser 42 to start. Moisture desorbed from the dehumidifying chamber by the dehumidifying assembly 22 and air flow into the condenser 42 under the action of the regenerating fan 43, so that part of the moisture in the air is condensed into liquid, and condensed liquid water is discharged through the water discharging port. The air after the removal of the moisture enters the heating assembly again under the action of the regenerating fan 43. The air in the regenerating passage 41 flows along the direction shown by the arrows in FIG. 3. The air after the removal of the moisture in the dehumidifying passage 21 flows to the external environment under the action of the circulating fan 23. The controller acquires a temperature between the heating assembly and the condenser through a second temperature sensor, and acquires a temperature of the second vent 212 through the third temperature sensor. When the temperature of the second vent 212 is higher than or equal to a second preset temperature, external environment dehumidification is completed. The circulating fan 23, the rotary disk motor 222, the heating assembly 223, the regenerating fan 43 and the condenser 42 are controlled to stop working.

In an embodiment, the first preset temperature and the second preset temperature may be equal or not equal to each other. Of course, under the external environment dehumidifying state, the user can manually control to stop this state.

As an example, the first preset rotational speed may be smaller than the second preset rotational speed, the first preset power may be larger than the second preset power, and the first preset temperature may be lower than the second preset temperature.

In some embodiments, the washer-dryer machine further includes an auxiliary passage switching apparatus for switching the first vent 211 to be connected to the washing cylinder 1 or the external environment. The first vent 211 is configured to include a third opening for connecting to the washing cylinder 1 and a fourth opening for connecting to the external environment; and the auxiliary passage switching apparatus is provided with a baffle rotatably connected to the first vent 211 for blocking the third or fourth opening.

When performing external environment dehumidification, the user inputs an external environment dehumidifying instruction. The controller controls the auxiliary passage switching apparatus to connect the first vent 211 to the external environment according to the external environment dehumidifying instruction, and controls the circulating fan 23 to rotate at a first rotational speed. At this time, the rotational direction of the circulating fan 23 is the same as or opposite to the rotational direction for drying the laundry, so that the air in the external environment flows from the second vent 212 or the first vent 211 into the dehumidifying passage 21 under the action of the circulating fan 23. The dehumidifying assembly performs dehumidification to the passing air under control of the controller. The dehumidified air flows from the first vent 211 or the second vent 212 into the external environment under the action of the circulating fan 23.

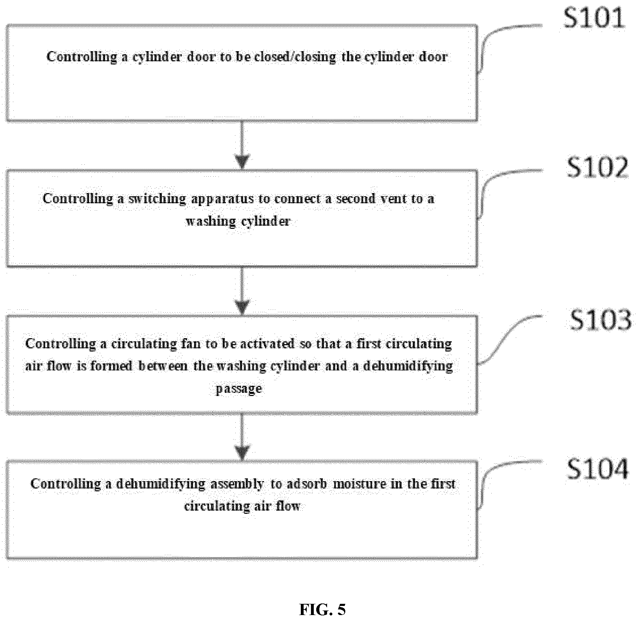

FIG. 5 is a flow chart of a dehumidifying method performed by a washer-dryer machine having a dehumidifying function according to an embodiment of the present application. As shown in FIG. 5, based on the same invention concept, the embodiment of the present application provides the dehumidifying method performed by a washer-dryer machine having a dehumidifying function. The method includes the following steps:
S101: controlling a cylinder door to be closed/closing the cylinder door;
S102: controlling a switching apparatus to allow a second vent to be connected to a washing cylinder;
S103: controlling a circulating fan to be activated so that a first circulating air flow is formed between the washing cylinder and a dehumidifying passage; and
S104: controlling a dehumidifying assembly to adsorb moisture in the first circulating air flow.

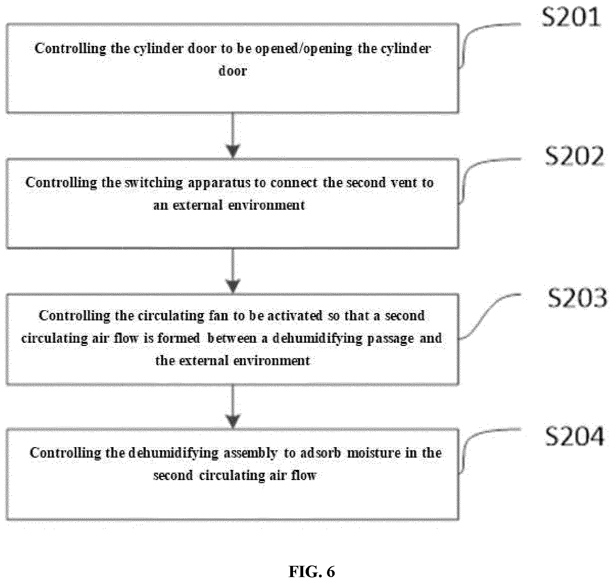

FIG. 6 is a flow chart of a dehumidifying method performed by a washer-dryer machine having a dehumidifying function according to another embodiment of the present application. As shown in FIG. 6, based on the same invention concept, the embodiment of the present application provides the dehumidifying method performed by a washer-dryer machine having a dehumidifying function. The method includes the following steps:
S201: controlling the cylinder door to be opened/opening the cylinder door;
S202: controlling the switching apparatus to allow the second vent to be connected to an external environment;
S203: controlling the circulating fan to be activated so that a second circulating air flow is formed between a dehumidifying passage and the external environment; and
S204: controlling the dehumidifying assembly to adsorb moisture in the second circulating air flow.

In other embodiments, the washer-dryer machine having a dehumidifying function may be a condensing-type heat pump-type washer-dryer machine. A switching apparatus is arranged in a pipe path where dry air flows into the washing cylinder 1. The switching apparatus can guide the dry air to flow into the washing cylinder 1 or the external environment in an alternative manner according to the setting of a user.

It should be understood that the above specific embodiments of the present application are only used to illustrate or explain the principles of the present application, and should not constitute any limitation to the present application. Therefore, any modifications, equivalent substitutions, improvements, etc. made without departing from the spirit and scope of the present application should be included within the protection scope of the present application. Furthermore, the appended claims of the present application are intended to cover all changes and modifications that fall within the scopes and boundaries of the appended claims, or equivalents of such scopes and boundaries.

## Claims

1. A washer-dryer machine having a dehumidifying function and comprising:
a washing cylinder, one end of the washing cylinder being provided with a cylinder door that can be opened and closed;
a dehumidifying apparatus including a dehumidifying passage and a dehumidifying assembly, the dehumidifying passage including a first vent and a second vent, the first vent being connected to the washing cylinder, the dehumidifying assembly being at least partially disposed within the dehumidifying passage, and the dehumidifying passage being provided with a circulating fan for promoting air flow within the dehumidifying passage; and
a passage switching apparatus for switching the second vent to be connected to the washing cylinder or to an external environment.

2. The washer-dryer machine having a dehumidifying function according to claim 1, wherein the second vent is configured to include a first opening for connecting to the washing cylinder and a second opening for connecting to the external environment;
and the passage switching apparatus is configured with a baffle for rotatably connecting to the second vent so as to block the first opening or the second opening.

3. The washer-dryer machine having a dehumidifying function according to claim 2, wherein a plane where the first opening is located and a plane where the second opening is located are at a preset included angle which is larger than or equal to 30 degrees and is smaller than or equal to 90 degrees.

4. The washer-dryer machine having a dehumidifying function according to claim 2, wherein the passage switching apparatus further includes a baffle motor whose output shaft is connected to the baffle so as to drive the baffle to rotate.

5. The washer-dryer machine having a dehumidifying function according to claim 1, wherein the dehumidifying assembly comprises a dehumidifying rotary disk and a rotary disk housing;
the dehumidifying rotary disk is rotatably arranged in the rotary disk housing;
a chamber of the rotary disk housing comprises a dehumidifying chamber and a moisture-discharging chamber, wherein the dehumidifying chamber forms a part of the dehumidifying passage, a part of the dehumidifying rotary disk which rotates to the dehumidifying chamber is configured to adsorb moisture within the dehumidifying passage, and a part of the dehumidifying rotary disk which rotates to the moisture-discharging chamber is configured to discharge the moisture.

6. The washer-dryer machine having a dehumidifying function according to claim 5, further comprising a regenerating passage which includes a regenerating apparatus and/or a condenser and/or a regenerating fan;
the moisture-discharging chamber forms a part of the regenerating passage;
the regenerating apparatus is arranged in the moisture-discharging chamber for desorbing moisture in the dehumidifying rotary disk;
the regenerating fan is configured to promote air flow in the regenerating passage; and
the condenser is configured to liquefy water vapor in the regenerating passage and discharge the liquefied water vapor through a water discharging port.

7. The washer-dryer machine having a dehumidifying function according to claim 6, wherein the regenerating apparatus is a heating assembly;
the heating assembly is connected to the rotary disk housing, and the heating assembly and the dehumidifying rotary disk are arranged at an interval in a parallel manner.

8. The washer-dryer machine having a dehumidifying function according to claim 7, wherein a third temperature sensor is arranged in the vicinity of the second vent for obtaining a third temperature of an air flow in the vicinity of the second vent so as to control operation of the heating assembly based on the third temperature.

9. The washer-dryer machine having a dehumidifying function according to claim 8, wherein a second temperature sensor is arranged in a pipe path between the heating assembly and the condenser for obtaining a second temperature of an air flow in the pipe path between the heating assembly and the condenser so as to judge if the condenser has a fault based on the second temperature.

10. The washer-dryer machine having a dehumidifying function according to claim 2, further comprising an enclosure, wherein
the washing cylinder is located in the enclosure, and the cylinder door is arranged on a side wall of the enclosure; and
the dehumidifying passage is located between the enclosure and the washing cylinder, and the second opening is arranged on a wall of the enclosure.

11. The washer-dryer machine having a dehumidifying function according to claim 10, wherein one end of the washing cylinder is provided with a washing cylinder air inlet connected to the first vent, the other end of the washing cylinder is provided with a washing cylinder air outlet connected to the second vent, and the first vent is arranged at a side of the washing cylinder away from the cylinder door.

12. The washer-dryer machine having a dehumidifying function according to claim 5, wherein the dehumidifying rotary disk is of a porous structure covered with a dehumidifying material.

13. The washer-dryer machine having a dehumidifying function according to claim 12, wherein the dehumidifying material is at least one of a cotton cloth, fibers, lithium chloride, a silica gel, a modified silica gel and a molecular sieve.

14. The washer-dryer machine having a dehumidifying function according to claim 7, wherein the heating assembly is an electric heating wire or a PTC heater.

15. The washer-dryer machine having a dehumidifying function according to claim 7, wherein when the heating assembly performs dehydration to the dehumidifying rotary disk, a residual temperature on the dehumidifying rotary disk can be transferred to the inside of the washing cylinder so as to increase the air temperature in the washing cylinder.

16. The washer-dryer machine having a dehumidifying function according to claim 7, wherein the regenerating passage is a closed loop; the heating assembly performs heating and dehydration to a part of the dehumidifying rotary disk located in a regenerating region to form water vapor; the water vapor pushed by the regenerating fan enters the condenser to be condensed into liquid water; the liquid water is discharged from the condenser through a water discharging port arranged at a bottom of the condenser; and condensed dry air pushed by the regenerating fan is blown to the heating assembly.

17. The washer-dryer machine having a dehumidifying function according to claim 7, wherein the regenerating passage is a non-closed loop; the regenerating fan sucks air from the external environment and blows the air to the heating assembly; moisture-containing air flow directly flows into the external environment after passing a regenerating region, or air flow condensed and liquefied by the condenser directly flows into the external environment.

18. The washer-dryer machine having a dehumidifying function according to claim 1, further comprising an auxiliary passage switching apparatus for switching the first vent to be connected to the washing cylinder or the external environment; the first vent is configured to include a third opening for connecting to the washing cylinder and a fourth opening for connecting to the external environment; and the auxiliary passage switching apparatus is provided with a baffle rotatably connected to the first vent for blocking the third or fourth opening.

19. A dehumidifying method performed by a washer-dryer machine having a dehumidifying function, the method comprising:
controlling a cylinder door to be opened;
controlling a switching apparatus to connect a second vent to an external environment;
controlling a circulating fan to be activated so that a second circulating air flow is formed between a dehumidifying passage and the external environment; and
controlling a dehumidifying assembly to adsorb moisture in the second circulating air flow.

20. The dehumidifying method performed by a washer-dryer machine having a dehumidifying function according to claim 1, further comprising:
controlling the cylinder door to be closed;
controlling the switching apparatus to connect the second vent to the washing cylinder;
controlling the circulating fan to be activated so that a first circulating air flow is formed between the washing cylinder and the dehumidifying passage; and
controlling the dehumidifying assembly to adsorb moisture in the first circulating air flow.
